# EUROPÄISCHE PATENTSCHRIFT

(11) **EP 1 260 894 B1**
(45) Veröffentlichungstag und Bekanntmachung des Hinweises auf die Patenterteilung: **09.11.2005**
(21) Anmeldenummer: 02009137.7
(22) Anmeldetag: 24.04.2002
(51) Int. Cl.: G05B 23/02

(54) **Verfahren zum Betrieb eines Antriebs und Vorrichtung**
Method for operating a drive and device
Procédé pour actionner un entraînement et dispositif

(30) Priorität: 10.05.2001 DE 10122759
(43) Veröffentlichungstag der Anmeldung: 27.11.2002
(73) Patentinhaber: Sew-Eurodrive GmbH & Co. KG, 76646 Bruchsal (DE)
(72) Erfinder: Schäfer, Roman, 76646 Bruchsal (DE)

(56) Entgegenhaltungen:
- EP-A- 0 418 189
- GB-A- 2 125 578
- US-A- 5 255 208
- US-A- 5 606 311

## Beschreibung

Die Erfindung betrifft ein Verfahren zum Betrieb eines Antriebs und eine Vorrichtung.

Bei industriellen Anlagen werden häufig Antriebe eingesetzt, die einen Elektromotor, ein Getriebe und einen Umrichter umfassen. Für insbesondere den Umrichter sind dabei Nenndaten zu beachten, bei deren dauerhafter Überschreitung, insbesondere bei dauerhafter Überschreitung des Mehrfachen dieser Nennwerte, eine Schädigung eintreten kann.

Aus der EP 0 418 189 eine Überwachungsvorrichtung beschrieben, die einen Verdichterströmungsabriss beschreibt. Nachteilig ist dabei, dass aus dem Zählerwert keine Rückschlüsse mehr zu machen sind, welche der Größen jetzt eigentlich zum Strömungsabriss geführt haben. Information geht also verloren, insbesondere Information über das zeitliche Maß, in welchem die Größe den Schwellenwert überschritten hat.

Aus der US 5 606 311 ist ein ähnliches Verfahren bei einem Luftfilter bekannt.

Aus der EP 1 075 078 A2 ist beispielsweise ein Antrieb bekannt, der einen von einem Umrichter versorgten Elektromotor aufweist, wobei kein Winkel-Geber mit der Motorwelle verbunden werden muss und trotzdem Werte für die Größen Drehmoment sowie Drehzahl erfassbar sind.

Umrichter zur Versorgung von Elektromotoren sind auch aus der EP 0 994 559 A2 bekannt.

Aus der WO 2004/077644 A2 sind für Antriebe verwendbare Getriebemotoren bekannt, die von Elektromotoren angetriebene Getriebe aufweisen.

Der Erfindung liegt daher die Aufgabe zugrunde, ein Verfahren zum Betrieb eines Antriebs weiterzubilden, wobei in kostengünstiger Weise Gefahren für Menschen und Maschinen verminderbar sein sollen.

Erfindungsgemäß wird die Aufgabe bei dem Verfahren zum Betrieb eines Antriebs nach den in Anspruch 1 oder 2 angegebenen Merkmalen und der Vorrichtung nach den in Anspruch 10 angegebenen Merkmalen gelöst.

Wesentliche Merkmale der Erfindung bei dem Verfahren nach Anspruch 1 sind, dass bei dem Verfahren zum Betrieb eines Antriebs,
der einen Elektromotor, ein Getriebe und einen Umrichter, insbesondere zur Versorgung des Elektromotors, umfasst,
jeweils nach einem Zeitabschnitt
- der jeweilige Wert von mehreren Größen bestimmt und/oder detektiert wird,
- die Werte jeweils mit Schwellenwerten verglichen werden,
   wobei jeder Größe ein oder mehrere Schwellenwerte zugeordnet sind,
- zweite Werte aus einem Speicher gelesen werden,
   wobei jeder Kombination von Schwellenwerten verschiedener Größen ein einziger zweiter Wert zugeordnet ist,
- abhängig vom Ergebnis des Vergleichens die zweiten Werte verändert werden und dann im Speicher gespeichert werden.

Statt mehreren Größen ist das Verfahren auch bei nur einer Größe anwendbar, wie im Anspruch 2 beschrieben.

Von Vorteil ist dabei, dass bei Antrieben, deren Belastung nur ungefähr oder gar nicht bekannt ist, eine Möglichkeit geschaffen ist, die ein Feststellen der auftretenden Größenordnung der physikalischen Größen erlaubt. Es ist also mit der Erfindung ermöglicht, bei einem Antrieb einer Anlage die auftretenden Werte für Drehmoment und Drehzahl zu bestimmen, insbesondere deren Häufigkeit des Auftretens der jeweiligen Werte. Somit sind auch Überlastungen, insbesondere einzelner Bauteile, erkennbar und es sind in kostengünstiger Weise Gefahren für Menschen und Maschinen verminderbar. Beispielsweise werden zur Gefahrverminderung die Antriebe ausgetauscht, verändert, abgeschaltet oder mit reduzierter Leistung betrieben. Außerdem ist somit auch eine Langzeitüberwachung ermöglicht, die eine Fehlersuche bei Problemen erleichtert oder sogar erst ermöglicht, da mit dem erfindungsgemäßen Verfahren die Historie der Größen in zumindest komprimierter Form zugänglich ist. Besonders vorteilhaft ist dabei der lange Zeitraum, über den hinweg die Beobachtung ermöglicht ist.

Weiterer Vorteil ist, dass die zweiten Werte gespeichert werden und daher von einer entsprechend geeigneten Vorrichtung, insbesondere elektrisch verbindbarer Rechner, verarbeitbar sind. Somit sind auch absolute und statistische Daten, insbesondere Wahrscheinlichkeitsverteilungen, bestimmbar. Außerdem lassen sich solche Daten auch mit für den Antrieb bekannten Parametern, wie Betriebsfaktoren oder dergleichen, verknüpfen und somit ein Überschreiten von Nennwerten oder zugelassenen Spitzenwerten oder ein Überschreiten von Belastungsgrenzen feststellen.

Bei einer vorteilhaften Ausgestaltung weist das Speichern in einen flüchtigen Speicher ausgeführt wird, dessen Werte nach größeren Zeitabständen, insbesondere 15 Minuten, in einen nichtflüchtigen Speicher geschrieben werden. Von Vorteil ist dabei, dass auch nach Stromausfall die Daten erhalten bleiben. Im schlimmsten Fall gehen nur die Daten, die zwischen vorletztem und letztem Zeitabstand bestimmt wurden, verloren.

Bei einer vorteilhaften Ausgestaltung ist der Zeitabschnitt jeweils kleiner als eine Sekunde. Von Vorteil ist dabei, dass die zeitliche Auflösung der Messdaten sehr gut ist.

Bei einer vorteilhaften Ausgestaltung betragen die Zeitabschnitte jeweils 50 Millisekunden. Von Vorteil ist dabei, dass auch zeitlich kurze Belastungsspitzen oder -schwankungen feststellbar sind.

Bei einer vorteilhaften Ausgestaltung sind jeder Messgröße ein oder mehrere Schwellenwerte zugeordnet, und dass diese Schwellenwerte jeweils gemäß einer Stufung gewählt sind. Insbesondere sind die Schwellenwerte konstant gestuft, bilden also eine Folge, wobei die Differenzen direkt aufeinander folgender Schwellenwerte der Folge gleich sind. Von Vorteil ist dabei, dass die Daten leicht interpretierbar sind und einen großen Informationsgehalt haben.

Bei einer vorteilhaften Ausgestaltung sind die Zeitabschnitte gleichgroß. Von Vorteil ist dabei, dass ein bloßes Inkrementieren des jeweiligen Zählerstandes auch die vollständige zeitliche Information enthält. Dadurch ist also der Speicherplatzbedarf erheblich reduzierbar. Dies ist insbesondere bei Einsatz von nichtflüchtigen Speichern wie EEPROM von Vorteil, weil diese nur langsam beschreibbar sind und somit große Datenmengen nur langsam speicherbar wären, kleine hingegen ausreichend schnell.

Bei einer vorteilhaften Ausgestaltung werden die zweiten Werte gelesen, insbesondere von einem einen Mikroprozessor umfassenden System wie PC, zentraler Steuerungsrechner, Laptop oder dergleichen, und daraus eine normierte Häufigkeitsverteilung bestimmt wird. Von Vorteil ist dabei, dass statistische Daten bestimmbar sind und somit Gefährdungen frühzeitig erkennbar sind.

Bei einer vorteilhaften Ausgestaltung ist die Häufigkeitsverteilung zweidimensional oder mehrdimensional, also die Häufigkeitsverteilung eine Funktion zweier oder mehrerer Größen ist. Von Vorteil ist dabei, dass bei der Analyse die Belastung nicht nur abhängig von einer Größe wie beispielhaft Drehmoment sondern auch abhängig von weiteren Größen wie beispielhaft Drehzahl feststellbar ist. Beispielsweise werden die Komponenten des Antriebs, umfassend Umrichter, Elektromotor und Getriebe, bei gleichem Drehmoment und verschiedenen Drehzahlen verschieden belastet. Daher ist diese zwei- oder mehrdimensionale Verteilungsfunktion und/oder deren zugrunde liegende Absolutwerte von großem Vorteil bei der Gesamtbewertung der Belastung. Die Bewertung der Belastung erfolgt mit Betriebsfaktoren oder Betriebsfaktorfunktionen, die aus praktisch und/oder theoretisch erarbeitetem Wissen bestimmt wurden.

Bei einer vorteilhaften Ausgestaltung ist die Häufigkeitsverteilung eine zweidimensionale Funktion von Drehmoment und Drehzahl ist. Von Vorteil ist dabei, dass in besonders einfacher und übersichtlicher Weise die Belastungsverteilung darstellbar ist. Außerdem sind weitere Kenngrößen, wie insbesondere statistische Größen leicht errechenbar. Beispielsweise lassen sich mit der Häufigkeitsverteilung und Betriebsfaktorfunktionen bewertete Häufigkeitsverteilungen errechnen, die bei Überschreiten von Schwellwerten oder Schwellwertverläufen Überlastungen und somit gefährliche Zustände erkennen lassen. Mit der Häufigkeitsverteilung lassen sich insbesondere auch Kenngrößen errechnen, die durch Faltungsintegrale definiert sind. Auch statistische Momente lassen sich leicht berechnen.

Bei weiteren vorteilhaften Ausgestaltung ist die Häufigkeitsverteilung als diskretes Histogramm bestimmt. Somit lassen sich die erfassten zweiten Werte besonders einfach und vorteilhaft diskret erfassen.

Bei einer vorteilhaften Ausgestaltung umfassen die Messgrößen ein Drehmoment, eine Drehzahl, einen Strom und/oder eine Spannung. Von Vorteil ist dabei, dass das Verfahren für verschiedene Messgrößen einsetzbar ist.

Bei einer vorteilhaften Ausgestaltung werden Drehmoment und/oder Drehzahl aus Messwerten mittels eines mathematischen Modells bestimmt. Von Vorteil ist dabei, dass nicht nur mit Sensoren direkt gemessene Werte sondern auch indirekt bestimmte Werte verwendbar sind.

Wesentliche Merkmale der Erfindung bei der Vorrichtung sind, dass Sensoren zur Bestimmung von Messgrößen mit dem Umrichter elektrisch verbunden sind, der Umrichter mindestens einen flüchtigen Speicher umfasst, vom Umrichter und/oder von einer weiteren Vorrichtung mindestens ein nichtflüchtiger Speicher umfasst ist, und dass der nichtflüchtige Speicher mit dem flüchtigen Speicher derart zum Datenaustausch elektrisch verbindbar ist, dass die zweiten Werte auch für Ausfall der Stromversorgung der Vorrichtung dauerhaft abspeicherbar sind. Von Vorteil ist dabei, dass auch bei Netzausfall die wesentliche Menge der Daten nicht verloren gehen.

Bei einer vorteilhaften Ausgestaltung ist ein Zähler vorhanden. Von Vorteil ist dabei, dass in besonders einfacher und kostengünstiger Weise die Vorrichtung herstellbar ist, insbesondere sogar ohne Mikroprozessor.

Bei einer vorteilhaften Ausgestaltung ist die Vorrichtung derart ausgeführt, dass zu jedem Schwellenwert ein Zähler zugeordnet ist, wobei der Zählerstand der Zähler jeweils einen zweiten Wert repräsentiert, wobei in jedem Zeitabschnitt während der Betriebszeit ein Zählerstand dann erhöht wird, insbesondere um ein Inkrement, wenn der jeweilige Wert für die jeweilige Messgröße gleich oder kleiner ist als der zum Zählerstand zugeordnete Schwellenwert und dieser Schwellenwert der kleinste all derjenigen Schwellenwerte ist, die größer sind als der Wert für die Messgröße. Von Vorteil ist dabei, dass ein äußerst geringer Speicherplatzbedarf notwendig ist.

Weiter vorteilhafte Ausgestaltungen ergeben sich aus den Unteransprüchen.

### Bezugszeichenliste

- n: Drehzahl
- M: Drehmoment
- t: Zeit
- Δt: Zeitabschnitt

Die Erfindung wird nun anhand von einer Abbildung näher erläutert:

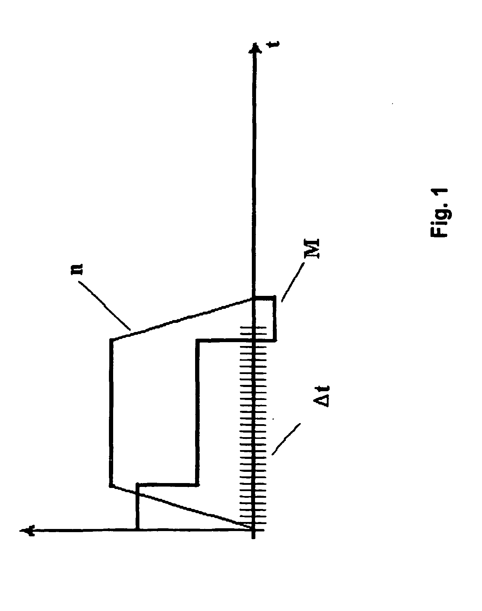

In der Figur 1 ist ein beispielhafter Zeitverlauf des Drehmoments M eines Antriebs schematisch gezeigt, der eine mechanische Last antreibt. Der zugehörige Drehzahlverlauf n ist ebenfalls in die Figur 1 eingezeichnet. Die Zeitachse ist mit t gekennzeichnet.

Der Antrieb umfasst dabei einen Elektromotor und ein Getriebe, das die mechanische Last antreibt. Im gezeigten Beispiel benötigt die Last im stationären Fall ein konstantes Drehmoment. Solche Antriebe sind bei Anlagen einsetzbar, wie beispielhaft Transportvorrichtungen für Menschen und/oder Güter bei Fließbändern.

In weiteren erfindungsgemäßen Ausführungsbeispielen sind auch Elektromotoren mit Bremse und/oder mit Winkel- oder Winkelgeschwindigkeits-Sensoren verwendbar. Darüber hinaus sind ein- oder mehrstufige Getriebe verwendbar.

Zur Versorgung des Elektromotors wird ein Umrichter eingesetzt. Dieser umfasst Sensoren, die zur Bestimmung von weiteren physikalischen Größen verwendbar sind. Insbesondere wird von der Software der Signalelektronik aus gemessenen Werten für Strom in regelmäßigen Zeitabständen ein Wert für Drehmoment bestimmt. Dabei verwendet die Software ein mathematisches Motormodell, wodurch der bestimmte Wert für Drehmoment auch geringfügige Abweichungen vom wahren physikalischen Wert des Drehmoments aufweisen kann, insbesondere bei nicht-stationären, sprunghaften Verläufen des Drehmoments. Auch ein Wert für Drehzahl ist mit der Software bestimmbar, wobei dieser Wert ebenfalls geringfügige Abweichungen vom wahren physikalischen Wert der Drehzahl aufweisen kann, insbesondere bei kleinen Drehzahlen oder der Drehzahl 0 U/min.

Umfasst der Antrieb bei weiteren erfindungsgemäßen Ausführungsbeispielen auch einen Winkel- oder Winkelgeschwindigkeitssensor, ist die Drehzahl sogar direkt und somit besonders gut erfassbar. Bei weiteren erfindungsgemäßen Ausführungsbeispielen sind auch andere Sensoren, wie beispielsweise Drehmomentsensoren einsetzbar, die dann ebenfalls einen direkteren und besseren Wert für Drehmoment zur Verfügung stellen.

Nach jedem Zeitabschnitt Δt wird erfindungsgemäß der Wert für Drehmoment und der Wert für Drehzahl detektiert und mit Schwellenwerten verglichen. Zu den Schwellenwerten sind jeweilige Zählerstände zugeordnet, die zu Beginn der Betriebszeit des Umrichters bei Erst-Inbetriebnahme auf Null gesetzt sind. Nach dem Vergleichen mit den Schwellenwerten wird der zum jeweiligen Schwellenwert zugehörige Zählerstand dann erhöht, wenn der Wert für Drehmoment oder Drehzahl gleich oder kleiner ist als der Schwellenwert und der Schwellenwert der kleinste all derjenigen Schwellenwerte ist, die größer sind als der Wert für Drehmoment oder Drehzahl. Dieses Erhöhen ist proportional zur Dauer der Zeitabschnitte. Bei regelmäßigen, gleich großen Zeitabschnitten wird der Zählerstand also inkrementiert.

Bei anderen erfindungsgemäßen Ausführungsbeispielen sind die Zeitabschnitte unregelmäßig und verschieden groß. Dabei wird der Zählerstand also um einen Betrag erhöht, der proportional zur jeweiligen Länge des betreffenden Zeitabschnittes ist.

Der zugehörige Zählerstand wird auch als zweiter Wert bezeichnet.

In einem ersten erfindungsgemäßen Ausführungsbeispiel weisen die Schwellenwerte eine gleichmäßige äquidistante Stufung auf. Der erste Schwellenwert liegt bei 10% des Nennwertes. Der zweite Schwellenwert bei 20 % des Nennwertes. Der n-te Schwellwert liegt dann bei n/10 * 100% des Nennwertes. Im zur Figur 1 gehörenden erfindungsgemäßen Ausführungsbeispiel läuft n von 1 bis 15 jeweils für Drehmoment und Drehzahl. Jedem Schwellwert ist ein Zählerstand zugeordnet.

Liegt der Wert für Drehmoment beispielsweise bei 35 % wird der vierte Zählerstand inkrementiert. In analoger Weise ist jedem Zählerstand eine jeweilige Drehzahl-Drehmoment-Kombination zugeordnet.

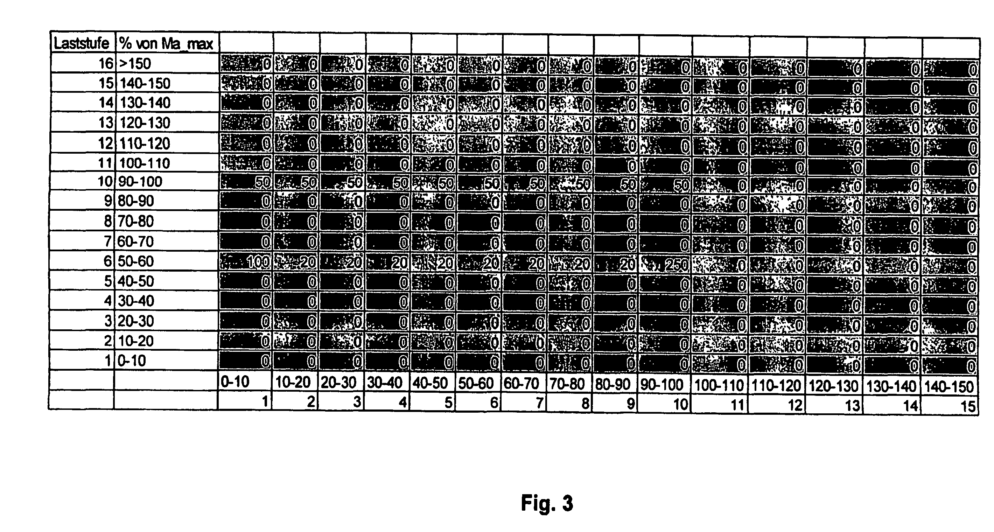

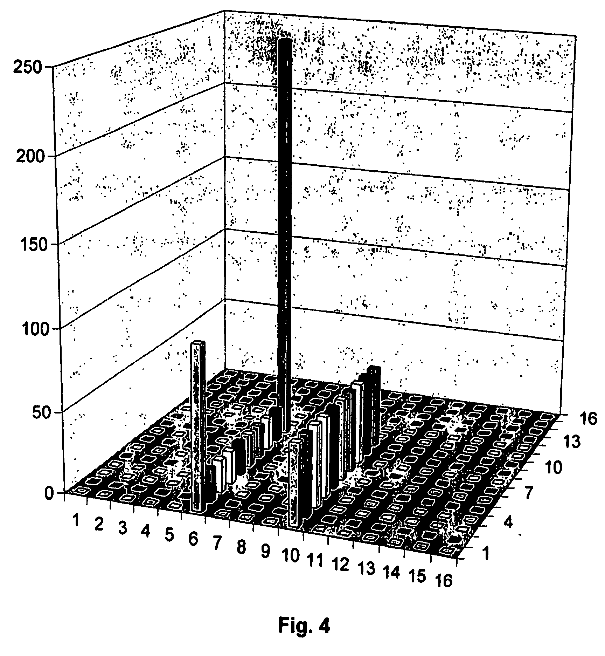

Die Zählerstände bilden eine zweifach indizierte, endliche Matrix und werden in der Figur 3 beispielhaft zweidimensional dargestellt. Dabei sind Abszisse und Ordinate Drehzahl und Drehmoment zugeordnet.

Eine beispielhafte Matrix von Zählerständen ist in Figur 3 gezeigt. Derjenige Bereich der Zählerstände, bei dem alle Größen unterhalb der Nennwerte, also 100%, liegen, ist dunkler gekennzeichnet.

In den Figuren 1 und 3 sind nur beispielhafte Verläufe und Daten dargestellt. Im Betrieb treten auch völlig andere Verläufe und Daten auf.

Aus der Matrix wird bei der Weiterverarbeitung der Daten durch einen Rechner mittels Addition aller Zählerstände die Gesamtzahl der Zeitabschnitte bestimmt. Mittels Division aller Matrixelemente durch diese Gesamtzahl entsteht aus der Matrix eine als Matrix dargestellte diskrete Häufigkeitsverteilung.

Diese Häufigkeitsverteilung wird dann zur Bestimmung des Belastungsgrades verwendet. Insbesondere werden die Matrixelemente mit jeweiligen Betriebsfaktoren multipliziert, wobei die derartig sind, dass das Überschreiten einer kritischen Zahl durch das jeweilige Multiplikationsergebnis eine unzulässige Belastung anzeigt.

Bei weiteren erfindungsgemäßen Ausführungsbeispielen wird bei einer solchen unzulässigen Belastung der Antrieb abgeschaltet oder seine Leistung begrenzt.

Das Abspeichern der Zählerstände erfolgt in einem ersten erfindungsgemäßen Ausführungsbeispiel im Umrichter selbst.

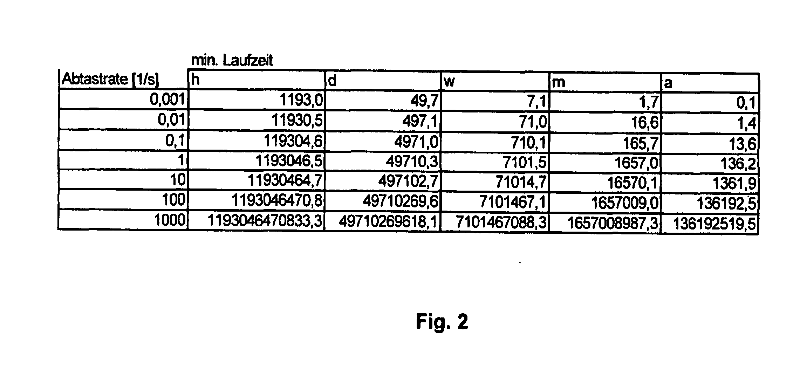

Besonderer Vorteil der Verwendung gleichgroßer Zeitabschnitte ist, dass eine Inkrementierung der jeweiligen Zählerstände ausreicht und somit das erfindungsgemäße Verfahren für eine äußerst große Zahl von Zeitabschnitten ausführbar ist. Dabei wird sogar nur ein äußerst kleiner Speicher benötigt. Dies ist in Figur 2 verdeutlicht. Ein beispielhafter Speicher für Zählerstände umfasst dort jeweils nur 4 Bytes. Damit ergibt sich bei einer Abtastrate von 1 kHz, also Zeitabschnitten von 0,001 s, im schlimmsten Fall eine maximal auswertbare Betriebszeit von 1193 Stunden, was 49,7 Tagen oder etwa 0,1 Jahren entspricht.

Bei einer Abtastung pro Sekunde ergibt sich im schlimmsten Fall eine maximal auswertbaren Betriebszeit von 136,2 Jahren. Erst dann besteht Gefahr des Überlaufens des Speichers für Zählerstand.

Der genannte schlimmste Fall tritt nur dann ein, wenn immer derselbe Zählerstand erhöht wird, also ein völlig gleichförmiger Betrieb vorliegt.

Für das in Figur 3 gezeigte Beispiel sind etwa 256 Zählerstände abzuspeichern. Der gesamte Speicherbedarf zum Abspeichern aller Zählerstände mit jeweils 4 Bytes beträgt also 1 kB.

Bei anderen erfindungsgemäßen Ausführungsbeispielen sind auch feinere und/oder nicht gleichmäßige äquidistante Stufungen der Schwellenwerte ausführbar.

Bei weiteren erfindungsgemäßen Ausführungsbeispielen erfolgt ein weiteres Speichern der Zählerstände in größeren Zeitabständen, beispielhaft alle 15 Minuten, in einen nichtflüchtigen Speicher, wie EEPROM. Somit ist auch bei Stromausfall die Information im Wesentlichen nicht gefährdet. Nur die Daten der letzten 15 Minuten, also die zwischen letztem und vorletztem Zeitabstand erfassten Daten, gehen verloren.

Der nichtflüchtige Speicher ist in einem erfindungsgemäßen Ausführungsbeispiel im Umrichter montiert. In einem anderen erfindungsgemäßen Ausführungsbeispiel ist er zusammen mit einer weiteren elektronischen Schaltung in einem anderen Gehäuse montiert, wobei er über eine elektrische Schnittstelle mit dem Umrichter verbunden ist. Zur Auswertung kann dann ein Rechner verbunden werden und die Zählerstände an diesen PC übertragen werden. Bei weiteren erfindungsgemäßen Ausführungsbeispielen ist er auch über einen Feldbus oder einen anderen Bus verbindbar. Alternativ sind die Daten auch in den nichtflüchtigen Speicher eines anderen Busteilnehmers oder des Zentralrechners übertragbar und dort auswertbar.

## Patentansprüche

1. Verfahren zum Betrieb eines Antriebs,
umfassend einen Elektromotor, ein Getriebe und einen Umrichter zur Versorgung des Elektromotors,
**dadurch gekennzeichnet, dass**
jeweils nach einem Zeitabschnitt
- der jeweilige Wert von mehreren Größen bestimmt und/oder detektiert wird,
- die Werte jeweils mit Schwellenwerten verglichen werden,
wobei jeder Größe ein oder mehrere Schwellenwerte zugeordnet sind,
- zweite Werte aus einem Speicher gelesen werden,
wobei jeder Kombination von Schwellenwerten verschiedener Größen ein einziger zweiter Wert zugeordnet ist,
- abhängig vom Ergebnis des Vergleichens die zweiten Werte verändert werden und dann im Speicher gespeichert werden.

2. Verfahren zum Betrieb eines Antriebs,
umfassend einen Elektromotor, ein Getriebe und einen Umrichter, zur Versorgung des Elektromotors,
**dadurch gekennzeichnet, dass**
jeweils nach einem Zeitabschnitt
- der Wert einer Größe bestimmt und/oder detektiert wird,
- der Wert jeweils mit Schwellenwerten verglichen wird,
zweite Werte aus einem Speicher gelesen werden,
wobei jedem Schwellenwert ein einziger zweiter Wert zugeordnet ist**,**
- abhängig vom Ergebnis des Vergleichens die zweiten Werte verändert werden und dann im Speicher gespeichert werden.

3. Verfahren nach mindestens einem der vorangegangenen Ansprüche,
**dadurch gekennzeichnet, dass**
die Größen Messgrößen oder von einer Software aus mindestens einer Messgröße bestimmte Modellgrößen sind.

4. Verfahren nach mindestens einem der vorangegangenen Ansprüche,
**dadurch gekennzeichnet, dass**
das Speichern in einen flüchtigen Speicher ausgeführt wird, dessen Werte nach größeren Zeitabständen, insbesondere 15 Minuten, in einen nichtflüchtigen Speicher geschrieben werden
und/oder dass
der Zeitabschnitt jeweils kleiner als eine Sekunde ist
und/oder dass
die Zeitabschnitte jeweils 50 Millisekunden betragen.

5. Verfahren nach mindestens einem der vorangegangenen Ansprüche,
**dadurch gekennzeichnet, dass**
diese Schwellenwerte jeweils gemäß einer Stufung gewählt sind
und/oder dass
die Stufung derart ist, dass die Schwellenwerte konstant gestuft sind, also eine Folge bilden,
wobei die Differenzen direkt aufeinander folgender Schwellenwerte der Folge gleich sind und/oder dass
die Stufung derart ist, dass die Schwellenwerte logarithmisch gestuft sind, also eine Folge bilden, wobei die Differenzen des Logarithmus direkt aufeinander folgender Schwellenwerte der Folge gleich sind.

6. Verfahren nach mindestens einem der vorangegangenen Ansprüche,
**dadurch gekennzeichnet, dass**
zu jedem zweiten Wert mindestens ein Schwellenwert gehört
und/oder dass
die Schwellenwerte jeweils entweder eine obere oder eine unter Schranke darstellen
und/oder dass
die Zeitabschnitte gleichgroß sind
und/oder dass
das Verändern der zweiten Werte ein Erhöhen ist
und/oder dass
das Erhöhen des zweiten Wertes proportional zum jeweiligen Zeitabschnitt ist
und/oder dass
die zweiten Werte gelesen werden, insbesondere von einem einen Mikroprozessor umfassenden System wie PC, zentraler Steuerungsrechner, Laptop oder dergleichen, und daraus ein Histogramm bestimmt wird.

7. Verfahren nach mindestens einem der vorangegangenen Ansprüche,
**dadurch gekennzeichnet, dass**
das Histogramm normiert wird
und/oder dass
das normierte Histogramm eine diskrete Häufigkeitsverteilung darstellt
und/oder dass
die zweiten Werte gelesen werden, insbesondere von einem einen Mikroprozessor umfassenden System wie PC, zentraler Steuerungsrechner, Laptop oder dergleichen, und daraus eine normierte kontinuierliche Häufigkeitsverteilung bestimmt wird
und/oder dass
die Häufigkeitsverteilung eine zwei- oder mehrdimensionale Funktion von zwei oder mehreren Größen ist.

8. Verfahren nach mindestens einem der vorangegangenen Ansprüche,
**dadurch gekennzeichnet, dass**
die Häufigkeitsverteilung eine zwei- oder mehrdimensionale Funktion von Drehmoment und Drehzahl ist
und/oder dass
die Schwellenwerte eine diskrete und/oder endliche Menge bilden.

9. Verfahren nach mindestens einem der vorangegangenen Ansprüche,
**dadurch gekennzeichnet, dass**
die Messgrößen ein Drehmoment, eine Drehzahl, einen Strom und/oder eine Spannung umfassen
und/oder dass
Drehmoment und/oder Drehzahl aus Messwerten mittels eines mathematischen Modells bestimmt werden.

10. Antrieb
umfassend einen Elektromotor, ein Getriebe und einen Umrichter, zur Versorgung des Elektromotors,
**dadurch gekennzeichnet, dass**
Sensoren zur Bestimmung von Messgrößen mit dem Umrichter elektrisch verbunden sind, der Umrichter mindestens einen flüchtigen Speicher umfasst,
vom Umrichter und/oder von einer weiteren Vorrichtung mindestens ein nichtflüchtiger Speicher umfasst ist,
wobei der nichtflüchtige Speicher als Mittel zum Abspeichern von zweiten Werten ausgeführt ist,
und dass der nichtflüchtige Speicher mit dem flüchtigen Speicher derart zum Datenaustausch elektrisch verbindbar ist, dass zweite Werte auch nach Ausfall der Stromversorgung der Vorrichtung dauerhaft abgespeichert bleiben,
wobei jeder Größe ein oder mehrere Schwellenwerte zugeordnet sind,
wobei jeder Kombination von Schwellenwerten verschiedener Größen ein einziger zweiter Wert zugeordnet ist,
wobei Mittel zum Vergleichen der mittels der Sensoren bestimmten Werte der Messgrößen mit den Schwellenwerten vorgesehen sind,
wobei Mittel zum Inkrementieren und nachfolgendem Abspeichern der zweiten Werte abhängig vom Ergebnis des Vergleichens vorgesehen sind.

11. Vorrichtung nach mindestens einem der vorangegangenen Ansprüche,
**dadurch gekennzeichnet, dass**
mindestens ein Zähler vorhanden ist
und/oder dass
die Vorrichtung derart ausgeführt ist, dass zu jedem Schwellenwert ein Zähler zugeordnet ist, wobei der Zählerstand der Zähler jeweils einen zweiten Wert repräsentiert,
wobei in jedem Zeitabschnitt während der Betriebszeit ein Zählerstand dann erhöht wird,
wenn der jeweilige Wert für die jeweilige Messgröße gleich oder kleiner ist als der zum Zählerstand zugeordnete Schwellenwert und dieser Schwellenwert der kleinste all derjenigen Schwellenwerte ist, die größer sind als der Wert für die Messgröße
und/oder dass
in jedem Zeitabschnitt während der Betriebszeit ein Zählerstand um ein Inkrement erhöht wird.

## Claims

1. A method of operating a drive comprising an electromotor, a set of gears and a d.c. voltage changer for supplying the electromotor,
**characterised in that**, according in each case to a time segment,
- the respective value of a plurality of variables is determined and/or detected,
- the values are in each case compared with limit values, one or more limit values being assigned to each variable,
- second values are read from a memory, a single second value being assigned to each combination of limit values of various variables,
- the second values are altered depending on the result of the comparison and then stored in the memory.

2. A method of operating a drive comprising an electromotor, a set of gears and a d.c. voltage changer for supplying the electromotor,
**characterised in that**, according in each case to a time segment,
- the value of a variable is determined and/or detected,
- the value is in each case compared with limit values, second values are read from a memory, a single second value being assigned to each limit value,
- the second values are altered depending on the result of the comparison and then stored in the memory.

3. A method according to at least one of the preceding claims,
**characterised in that** the variables are measured variables or model variables determined by software from at least one measured variable.

4. A method according to at least one of the preceding claims,
**characterised in that** the storage is carried out in a volatile memory, the values of which are recorded in a non-volatile memory after fairly long time intervals, in particular 15 minutes,
and/or that the time segment is in each case less than one second,
and/or that the time segments are in each case 50 milliseconds.

5. A method according to at least one of the preceding claims,
**characterised in that** these limit values are selected in each case according to a stepped scale,
and/or that the stepping is such that the limit values are constantly stepped, i.e. they form a sequence wherein the differences between directly successive limit values of the sequence are equal,
and/or that the stepping is such that the limit values are logarithmically stepped, i.e. they form a sequence wherein the differences between the logarithm of directly successive limit values of the sequence are equal.

6. A method according to at least one of the preceding claims,
**characterised in that** at least one limit value belongs to each second value,
and/or that the limit values in each case represent either and an upper or a lower threshold,
and/or that the time segments are of equal size,
and/or that the alteration of the second values is an increase therein,
and/or that the increase in the second value is proportional to the respective time segment,
and/or that the second values are read, in particular by a system comprising a microprocessor, such as a PC, a central control computer, a laptop or the like, and a histogram is determined therefrom.

7. A method according to at least one of the preceding claims,
**characterised in that** the histogram is normalised,
and/or that the normalised histogram represents a discrete frequency distribution, and/or that the second values are read, in particular by a system comprising a microprocessor, such as a PC, a central control computer, a laptop or the like, and a normalised continuous frequency distribution is determined therefrom,
and/or that the frequency distribution is a two-dimensional or multidimensional function of two or more variables.

8. A method according to at least one of the preceding claims,
**characterised in that** the frequency distribution is a two-dimensional or multidimensional function of torque and rotation speed,
and/or that the limit values form a discrete and/or finite quantity.

9. A method according to at least one of the preceding claims,
**characterised in that** the measured variables comprise a torque, a rotation speed, a current and/or a voltage,
and/or that torque and/or rotation speed are determined from measured values with the use of a mathematical model.

10. A drive comprising an electromotor, a set of gears and a d.c. voltage changer for supplying the electromotor,
**characterised in that** sensors are electrically connected to the d.c. voltage changer for the purpose of determining measured variables,
the d.c. voltage changer comprises at least one volatile memory,
at least one non-volatile memory is included in the d.c. voltage changer and/or in a further device,
wherein the non-volatile memory is designed as a means of storing second values, and that, for the purpose of data exchange, the non-volatile memory is electrically connectable to the volatile memory in such a way that second values remain permanently stored even after failure of the power supply,
wherein one or more limit values are assigned to each variable,
wherein a single second value is assigned to each combination of limit values of various variables,
wherein means are provided for comparing, with the limit values, the values of measured variables determined by means of the sensors
wherein means are provided for incrementing and subsequently storing the second values depending on the result of the comparison.

11. A device according to at least one of the preceding claims,
**characterised in that** at least one counter is present,
and/or that the device is designed in such a way that a counter is assigned to each limit value, the counter status of the counters in each case representing a second value,
wherein, in each time segment during the operating time, a counter status is raised if the respective value for the respective measured variable is smaller than or equal to the threshold value assigned to the counter status and this limit value is the smallest of all those limit values which are greater than the value for the measured variable, and/or that, in each time segment during the operating period, a counter status is raised by one increment.

## Revendications

1. Procédé pour actionner un entraînement
comprenant un moteur électrique, un engrenage et un variateur de vitesse pour l'alimentation du moteur électrique,
**caractérisé par le fait que**
- on détermine et/ou détecte la valeur respective de plusieurs grandeurs,
- on compare chacune des valeurs avec des valeurs seuils, une ou plusieurs valeurs seuils étant associées à chaque grandeur,
- on lit des deuxièmes valeurs dans une mémoire, une seule deuxième valeur étant associée à chaque combinaison de valeurs seuils de différentes grandeurs,
- en fonction du résultat de la comparaison, on modifie les deuxièmes valeurs et on les enregistre ensuite dans la mémoire,
le tout chaque fois après un intervalle de temps.

2. Procédé pour actionner un entraînement
comprenant un moteur électrique, un engrenage et un variateur de vitesse pour l'alimentation du moteur électrique,
**caractérisé par le fait que**
- on détermine et/ou détecte la valeur d'une grandeur,
- on compare la valeur avec des valeurs seuils,
- on lit des deuxièmes valeurs dans une mémoire, une seule deuxième valeur étant associée à chaque valeur seuil,
- en fonction du résultat de la comparaison, on modifie les deuxièmes valeurs et on les enregistre ensuite dans la mémoire,
le tout chaque fois après un intervalle de temps.

3. Procédé selon au moins l'une des revendications précédentes,
**caractérisé par le fait que**
les grandeurs sont des grandeurs mesurées ou des grandeurs de modèle déterminées par un logiciel à partir d'au moins une grandeur mesurée.

4. Procédé selon au moins l'une des revendications précédentes,
**caractérisé par le fait que**
l'enregistrement est effectué dans une mémoire volatile dont les valeurs sont écrites dans une mémoire non volatile après des intervalles de temps plus grands, en particulier 15 minutes et/ou que
l'intervalle de temps est chaque fois inférieur à une seconde
et/ou que
les intervalles de temps sont chaque fois de 50 millisecondes.

5. Procédé selon au moins l'une des revendications précédentes,
**caractérisé par le fait que**
les valeurs seuils sont choisies chaque fois selon un échelonnement
et/ou que
l'échelonnement est tel que les valeurs seuils sont échelonnées de manière constante et forment ainsi une suite, les différences de valeurs seuils directement successives de la suite étant égales
et/ou que
l'échelonnement est tel que les valeurs seuils sont échelonnées de manière logarithmique et forment ainsi une suite, les différences du logarithme de valeurs seuils directement successives de la suite étant égales.

6. Procédé selon au moins l'une des revendications précédentes,
**caractérisé par le fait que**
au moins une valeur seuil est associée à chaque deuxième valeur
et/ou que
les valeurs seuils représentent chaque fois une limite supérieure ou une limite inférieure
et/ou que
les intervalles de temps sont de même longueur
et/ou que
la modification des deuxièmes valeurs est une augmentation
et/ou que
l'augmentation de la deuxième valeur est proportionnelle à l'intervalle de temps respectif et/ou que
les deuxièmes valeurs sont lues, en particulier par un système comprenant un microprocesseur comme un PC, un ordinateur de commande central, un ordinateur portable ou analogue, et on détermine à partir d'elles un histogramme.

7. Procédé selon au moins l'une des revendications précédentes,
**caractérisé par le fait que**
l'histogramme est normalisé
et/ou que
les deuxièmes valeurs sont lues, en particulier par un système comprenant un microprocesseur comme un PC, un ordinateur de commande central, un ordinateur portable ou analogue, et on détermine à partir d'elles une distribution de fréquence continue normalisée
et/ou que
la distribution de fréquence est une fonction bi- ou multidimensionnelle de deux ou plusieurs grandeurs.

8. Procédé selon au moins l'une des revendications précédentes,
**caractérisé par le fait que**
la distribution de fréquence est une fonction bi- ou multidimensionnelle du couple et de la vitesse de rotation
et/ou que
les valeurs seuils forment un ensemble discret et/ou fini.

9. Procédé selon au moins l'une des revendications précédentes,
**caractérisé par le fait que**
les grandeurs mesurées comprennent un couple, une vitesse de rotation, un courant et/ou une tension
et/ou que
couple et vitesse de rotation sont déterminés à partir de valeurs mesurées à l'aide d'un modèle mathématique.

10. Entraînement
comprenant un moteur électrique, un engrenage et un variateur de vitesse pour l'alimentation du moteur électrique,
**caractérisé par le fait que**
des capteurs pour la détermination de grandeurs mesurées sont connectés électriquement au variateur de vitesse,
le variateur de vitesse comprend au moins une mémoire volatile,
le variateur de vitesse et/ou un autre dispositif comprend au moins une mémoire non volatile, la mémoire non volatile étant réalisée sous forme de moyen pour enregistrer des deuxièmes
valeurs,
et que la mémoire non volatile peut être connectée électriquement à la mémoire volatile pour l'échange de données de telle manière que les deuxièmes valeurs soient enregistrables durablement même en cas de défaillance de l'alimentation électrique du dispositif,
une ou plusieurs valeurs seuils étant associées à chaque grandeur,
une seule deuxième valeur étant associée à chaque combinaison de valeurs seuils de différentes grandeurs,
des moyens pour comparer les valeurs des grandeurs mesurées déterminées à l'aide des capteurs avec les valeurs seuils étant prévus,
des moyens pour incrémenter et ensuite enregistrer les deuxièmes valeurs en fonction du résultat de la comparaison étant prévus.

11. Dispositif selon au moins l'une des revendications précédentes,
**caractérisé par le fait que**
au moins un compteur est présent
et/ou que
le dispositif est réalisé de telle manière qu'à chaque valeur seuil est associé un compteur, l'indication de compteur représentant chaque fois une deuxième valeur,
une indication de compteur étant augmentée dans chaque intervalle de temps pendant le temps de fonctionnement
lorsque la valeur respective de la grandeur mesurée respective est égale ou inférieure à la valeur seuil associée à l'indication de compteur et cette valeur seuil est la plus petite de toutes les valeurs seuils qui sont supérieures à la valeur de la grandeur mesurée
et/ou que
une indication de compteur est augmentée d'un incrément dans chaque intervalle de temps pendant le temps de fonctionnement.
